# Europäisches Patentamt

# European Patent Office

# Office européen des brevets

(11) Veröffentlichungsnummer: **0 209 618**
**B1**

# EUROPÄISCHE PATENTSCHRIFT

(45) Veröffentlichungstag der Patentschrift:
**12.07.89**

(21) Anmeldenummer: **85109422.7**

(22) Anmeldetag: **26.07.85**

(51) Int. Cl.⁴: **F24D 3/14**

(54) **Fussbodenheizung.**

(43) Veröffentlichungstag der Anmeldung:
**28.01.87 Patentblatt 87/5**

(45) Bekanntmachung des Hinweises auf die Patenterteilung:
**12.07.89 Patentblatt 89/28**

(84) Benannte Vertragsstaaten:
**AT BE CH DE FR GB IT LI NL SE**

(56) Entgegenhaltungen:
**DE-A- 2 618 621**
**DE-A- 3 111 348**
**DE-A- 3 403 831**
**GB-A- 2 122 126**

(73) Patentinhaber: **PVG-Patentverwertungsgesellschaft mbH, Zülpicher Strasse 70, D-5164 Nörvenich(DE)**

(72) Erfinder: **Reimer, Adolf, Rhein-Mosel-Strasse 52, D-5401 Beulich(DE)**

(74) Vertreter: **Reinhard, Skuhra, Weise, Leopoldstrasse 51, D-8000 München 40(DE)**

**Beschreibung**

Die Erfindung betrifft eine Fußbodenheizung gemäß dem Oberbegriff des Patentanspruchs 1 sowie ein Verfahren zur Herstellung einer Fußbodenheizung gemäß dem Oberbegriff des Patentanspruchs 6.

Eine Fußbodenheizung nach Oberbegriff des Patentanspruchs 1 ist aus der DE-A 3 111 348 bekannt. Bei dieser Fußbodenheizung dienen Abstandshalter zur Halterung von Bewehrungsgittern in zwei zueinander beabstandeten Ebenen. An der Oberseite der Abstandshalter über der oberen Bewehrungsebene befindet sich ein Aufnahmeteil für die Heizungsrohre der Fußbodenheizung. Die Abstandshalter werden in üblicher Weise auf einer Dämmunterlage oder einem Rohboden aufgesetzt. Nach Verlegung der Bewehrungsgitter in den zwei Ebenen und nach dem abschließenden Einbringen der Heizungsrohre oberhalb der oberen Bewehrungsebene wird die gesamte Konstruktion mit Estrich vergossen, so daß die Heizungsrohre in dem oberhalb der Bewehrungsgitter verbleibenden Estrichabschnitt zu liegen kommen und damit keine homogene und monolithisch ausgebildete Betonplatte oberhalb der Bewehrungsgitter gegossen werden kann.

In der GB-A 2 122 126 ist ein Bodenaufbau beschrieben, bei dem ein unteres Bewehrungsgitter verlegt wird, anschließend Rohre auf dem unteren Bewehrungsgitter verlaufend verlegt werden, wonach erste Abstandselemente zur Halterung der Bewehrung in einer ersten Ebene eingesetzt und die Bewehrungsgitter angehoben werden, bevor zweite Abstandselemente eingesetzt und anschließend ein oberes Bewehrungsgitter in der zweiten, oberen Ebene auf die zweiten Abstandselemente aufgelegt wird. Dieses Verfahren dient zur Herstellung einer verstärkten Betonschicht, die Rohre verschiedener Art, beispielsweise auch Kabel aufnehmen soll.

Der Erfindung liegt die Aufgabe zugrunde, eine Fußbodenheizung zu schaffen, bei der eine beliebig dicke Betonplatte in einem Arbeitsgang gegossen werden kann und bei der die Festigkeitseigenschaften hohen Beanspruchungen standhält und trotzdem eine optimale Wärmeabgabe sicherstellt.

Ferner schafft die Erfindung ein Verfahren zur Herstellung einer derartigen Fußbodenheizung.

Die vorstehend genannte Aufgabe wird erfindungsgemäß durch die Merkmale des Patentanspruchs 1 gelöst.

Ein Verfahren zur Herstellung einer Fußbodenheizung wird durch die Merkmale des Patentanspruchs 7 gelöst.

Weitere Ausgestaltungen der Erfindung sowie eines Verfahrens zur Herstellung der Fußbodenheizung ergibt sich aus den weiteren Unteransprüchen.

Die erfindungsgemäße Fußbodenheizung eignet sich insbesondere zum Einbau in Industrieböden; und/oder in Verbindung mit Garagenauffahrten, die im Freien gelegen sind und im Winter beheizbar sind. Die Aufbaukonstruktion der Fußbodenheizung, d.h. die Betonplatte, welche die Heizungsrohre und die über sowie unter den Heizungsrohren befindlichen Bewehrungsgitter einschließt, hat vorteilhafterweise monolitische und homogene Struktur, sie läßt sich insbesondere auch in einem einzigen Arbeitsgang ausführen, sodaß sehr gute Stabilitätseigenschaften erreichbar sind.

Die erfindungsgemäße Fußbodenheizung läßt sich darüber hinaus schnell und kostensparend herstellen, wobei einfachste Elemente zur Halterung der Bewehrungsgitter in verschiedenen Ebenen verwendbar sind. Insbesondere dienen die einzelnen Abstandselemente nicht zur Halterung der in den beiden Ebenen verlegten Bewehrungsgitter, was die Verlegunsarbeiten erheblich vereinfacht.

Im folgenden wird eine bevorzugte Ausführungsform der Fußbodenheizung an Hand der Zeichnung zur Erläuterung weiterer Merkmale beschrieben.

Die Zeichnung zeigt einen schematischen Schnitt der Konstruktion einer Bodenheizung.

Die einzige Zeichnung zeigt eine bevorzugte Ausführungsvariante der Fußbodenheizung. Auf dem Rohboden, einer Dämmschicht oder einer speziellen Bodenkonstruktion, welche in der Zeichnung mit 1 bezeichnet sind, werden erste Bewehrungsgitter 2 aufgelegt, in dem die Bewehrungsgitter 2 auf die Oberfläche der Schicht 1 gelegt werden. Etwaige Fugen in dem Unterboden oder in der Schicht 1 werden nach einer bevorzugten Ausführungsform insofern beachtet, daß die Bewehrungsgitter im Bereich dieser Fugen, die in der Zeichnung nicht dargestellt sind, unterbrochen sind. Fugen in der Schicht oder in dem Rohboden 1 sind dann vorgesehen, wenn es sich um eine vergleichbar große Fläche handelt. Nach dem Auflegen der Bewehrungsgitter 2 auf die Oberfläche der Schicht 1 werden nicht gezeigte Modulationsbänder mit Halterungsclips für die später zu verlegenden Kunststoffrohre in einem vorbestimmten Raster verlegt, wonach die Kunststoffrohre 3 in einem vorgegebenen, vorzugsweise mäanderförmigen Verlauf verlegt und durch die Modulationsbänder mit Clips in dem vorbestimmten Verlauf beibehalten werden. Nach einer vorteilhaften Ausführungsform werden die Kunststoffrohre 3 im Fugenbereich mit Schaumstoffmanschetten oder ähnlichem umgeben, um die Rohre gegenüber im Fugenbereich auftretenden mechanischen Beanspruchungen zu schützen, insbesondere um Stauchungen oder Dehnungen, die sich im Fugenbereich in dem später eingebrachten Estrich ergeben können, nicht auf die Heizungsrohre 3 übertragen zu lassen. Nunmehr werden erste, untere Abstandshalter 4 gleicher Höhe unter die Bewehrungsgitter 2 eingesetzt und dabei die Bewehrungsgitter 2 in eine erste mit E$_i$ bezeichnete Ebene angehoben, d.h. die Bewehrungsgitter 2 werden aufgebockt und in einem vorbestimmten Abstand über der Oberfläche der Schicht 1 fixiert. Anschließend werden zweite Abstandselemente 5 auf die Oberfläche der Schicht 1 aufgesetzt, wobei die Abstandselemente 5 sogenannte Vierbeine sind und aus zwei kreuzweise zueinander liegenden Bügeln bestehen. Einer der Bügel der Abstandselemente 5 eines der Vierbeine ist in der Zeichnung dargestellt. Nach dem Einbringen der zweiten Abstandselemente 5, deren Höhe um ein mehrfaches größer ist als die Höhe der ersten Abstandselemente 4 werden weitere Bewehrungsgitter 6 in einer durch die Höhe

der Abstandselemente 5 bestimmten Ebene E$_{II}$ eingesetzt und kommen somit in der Ebene E$_{II}$ zum liegen. Nach dem Auflegen der die Ebene E$_{II}$ definierenden Bewehrungsgitter 6 liegen die Heizungsrohre 3 mit den nicht dargestellten Modulationsbändern und Halterungsclips noch auf den Bewehrungsgittern 2, welche die Ebene E$_{I}$ ergeben. Sobald die oberen Bewehrungsgittern 6 aufgelegt sind, werden die Heizungsrohre 3 angehoben, bis sie an der Unterseite der Bewehrungsgitter 6 zur Anlage kommen und mittels Befestigungselementen, beispielsweise Kabelbändern, an dem Bewehrungsgitter 6 befestigt. Nach oder vor der Befestigung der Heizungsrohre 3 an den Bewehrungsgittern 6 werden die Modulationsbänder mit ihren Halterungsclips von den Heizungsrohren 3 entfernt und aus dem Fußbodenaufbau entnommen. Damit wird erreicht, daß die Modulationsbänder nicht in dem bisher beschriebenen Aufbau der Fußbodenheizung verbleiben, und Material schwächungen im Estrich, hervorgerufen durch die Modulationsbänder mit zugehörigen Halterungsclips, ausgeschlossen sind. Beim Anheben und Befestigen der Heizungsrohre 3 an den oberen Bewehrungsgittern 6 ist darauf zu achten, daß die vorher durch die Modulationsbänder definierten Verläufe der Heizungsrohre und die Abstände benachbarter Heizungsrohre zueinander beibehalten werden. Sobald die Heizungsrohre 3 an den oberen Bewehrungsgittern 6 befestigt sind, kann der gesamte Aufbau mit Beton o.dgl. vergossen werden, wobei der Beton soweit aufgefüllt wird, daß sich eine oberhalb der oberen Bewehrungsgitter 6 liegende Schicht 8 vorbestimmter Stärke ergibt. Die Dicke der Schicht 8 entspricht der Verkehrslast, mit welcher die beschriebene Fußbodenheizung konzipiert ist. Die komplette Vormontage der Bewehrungsgitter in den beiden Ebenen E$_{I}$ und E$_{II}$ mit den Heizungsrohren 3 unterhalb der Ebene E$_{II}$ ermöglicht eine homogene, monolitische Betonierung der gesamten Fußbodenkonstruktion.

Bei einer bevorzugten Ausführungsform befindet sich die Bewehrung der Ebene E$_{I}$ in einem Abstand von circa 30 mm über der Oberfläche der Schicht 1, während der Abstand der Bewehrung in der Ebene E$_{II}$ zur Bewehrung in der Ebene E$_{I}$ 90 mm beträgt. Die Gesamthöhe des Betons einschließlich der Schicht 8 beträgt hierbei 180 mm. Der Beton ist in der Zeichnung strichpunktiert angedeutet und entspricht dem Bezugszeichen 10. Die zur Befestigung der Heizungsrohre 3 an den Bewehrungsgittern 6 verwendeten Befestigungselemente, beispielsweise Kabelbänder, sind mit dem Bezugszeichen 11 angedeutet.

Es ist ersichtlich, daß von der berechneten Verkehrslast die Höhe der Schicht 8 und die Gesamthöhe·der Betonschicht 10 abhängt und damit im Bedarfsfall andere als die vorstehend angegebenen Gesamtstärke vorgesehen werden können. Wesentlich ist, daß die Heizungsrohre unterhalb der durch die Bewehrungsgitter 6 definierten Ebene E$_{II}$ liegen, trotzdem aber ein vergleichbar kleiner Abstand zur Oberfläche 12 des Betons eingehalten ist, um eine maximale Ausbeute der zugeführten Heizenergie sicherzustellen.

Der Aufbau eines Unterbodens einer Fußbodenheizung ist an sich bekannt. Zumeist werden die Abstandselemente und/oder Heizungsrohre mitsamt dem Beton oberhalb einer Dämmschicht vorgesehen, die auf einem Rohboden oder einem Rohbeton aufgelegt ist. Wird die erfindungsgemäße Fußbodenheizung für freie Anlagen, insbesondere Garagenauffahrten, vorgesehen, so kann eine bewußte Durchsickerung von Wasser durch die Betonschicht 10 erwünscht sein. In diesem Fall wird die Schicht bzw. der Unterboden 1 mit Entwässerungskanälen versehen, um das durch die Betonschicht 10 durchsickernde Wasser gezielt ablaufen lassen zu können.

Bei der vorstehend beschriebenen Fußbodenheizung werden vorzugsweise Kunststoffrohre mit ovalem Querschnitt verwendet.

Die beschriebene Fußbodenheizung findet insbesondere Verwendung als Industriebodenheizung und ist für Belastungen nach DIN 1055 (Zeile 7), d.h. für mindestens 1000 kg/m² oder KN/m².

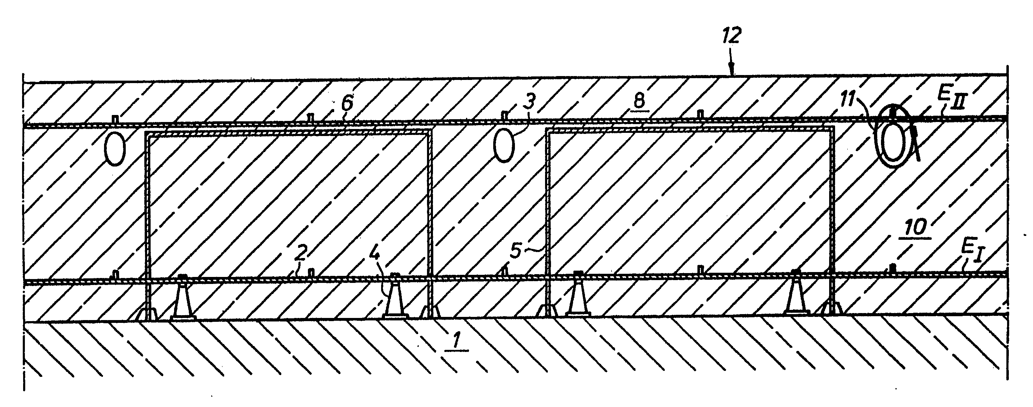

Die in Verbindung mit Fig. 1 beschriebene Schicht 10 besteht aus einer aushärtbaren Masse, vorzugsweise Beton oder gegebenenfalls Estrich, und hat eine Mindeststärke von 15 cm sowie eine maximale Stärke von ca. 30 cm. Die Schicht 10 kann auf einem Unterboden 1 vorgesehen sein oder z.B. bei Flughäfen die direkt auf dem Erdboden befindliche, gegebenenfalls einzige Schicht der Start-/Landebahn darstellen. Der Abstand zwischen den beiden Bewehrungsgittern 2, 6 beträgt zwischen etwa 50 mm bei Auslegung für geringe Belastungen und etwa 200 mm bei Auslegung für hohe Belastungen.

Die beschriebene Bodenheizung läßt sich auch in Form von Platten ausbilden, wobei das Heizregister, d.h. die Heizungsrohre 3 in die statischen Bodenplatten von Industriehallen, Außenflächen oder dergleichen integriert wird.

Die Aufhängung der Heizungsrohre 3 unter der oberen Bewehrung (6) gewährleistet deren Verlegung in monolithischem Beton und verhindert ein Wandern bzw. Aufschwimmen der Heizungsrohre 3 oder Abschnitte derselben nach oben während des Einbringens des Betons. Damit eignet sich die erfindungsgemäße Bodenheizung besonders zum Einsatz als Betonschicht mit statischer Funktion und integrierter Heizwirkung im Gegensatz zu dem Fall, in welchem eine Heizkonstruktion als Verbundkonstruktion auf eine vorhandene Betonplatte oder -schicht aufgebracht wird.

## Patentansprüche

1. Fußbodenheizung, bestehend aus in zwei zueinander beabstandeten Ebenen liegenden Bewehrungsgittern (2, 6) und Heizungsrohren (3), insbesondere aus Kunststoff, bei der die Bewehrungsgitter (2, 6) durch Abstandselemente (4, 5) gegenüber einem Unterboden (1) gehalten sind und bei der die Bewehrungsgitter (2, 6) und Heizungsrohre (3) in einer aushärtbaren Masse (10) eingebettet sind, dadurch gekennzeichnet, daß die Heizungsrohre (3) mit beispielsweise mäanderförmigem Verlauf unterhalb der Ebene der oberen Bewehrungsgitter (6) verlaufend an dem oberen Bewehrungsgitter (6) gehaltert sind, und daß der Abstand zwischen den beiden Bewehrungsgittern (2, 6) größer als der Durchmesser des Heizungsrohres (3) ist.

2. Fußbodenheizung nach Anspruch 1, dadurch gekennzeichnet, daß eine Halterung (11) für die Heizungsrohre (3) vorgesehen ist, und daß die Heizungsrohre (3) in Abstand zum oberen und zum unteren Bewehrungsgitter (2, 6) gehaltert sind.

3. Fußbodenheizung nach Anspruch 2, dadurch gekennzeichnet, daß als Halterung für die Heizungsrohre (3) Bänder (11) oder dergleichen vorgesehen sind, welche die Heizungsrohre an den oberen Bewehrungsgittern (6) unter diesen halten.

4. Fußbodenheizung nach einem der Ansprüche 1 bis 3, dadurch gekennzeichnet, daß die Abstandselemente (4, 5) auf einer Dämmschicht angeordnet sind, die auf einem Rohrbetonaufbau (11) oder einem Rohboden aufgelegt ist.

5. Fußbodenheizung nach Anspruch 4, dadurch gekennzeichnet, daß der Rohbetonaufbau Wasserableitungskanäle aufweist.

6. Verfahren zur Herstellung einer Fußbodenheizung, bei dem zuerst ein unteres Bewehrungsgitter (2) auf einem Unterboden verlegt wird, bei dem anschließend die Heizungsrohre auf dem unteren Bewehrungsgitter (2) verlaufend verlegt werden, bei dem anschließend erste Abstandselemente (2) zur Halterung des unteren Bewehrungsgitters (2) auf den Unterboden aufgesetzt und das untere Bewehrungsgitter (2) auf die ersten Abstandselemente (4) aufliegend angehoben wird, dadurch gekennzeichnet, daß zweite Abstandselemente (5) auf den Unterboden aufgesetzt werden und anschließend obere Bewehrungsgitter (6) auf die zweiten Abstandselemente (5) aufgelegt werden, daß dann die Heizungsrohre (3) angehoben und an den oberen Bewehrungsgittern unterhalb dieser oberen Bewehrungsgitter (6) befestigt werden, bevor eine aushärtbare Masse, vorzugsweise Beton (10) zur Einbettung der oberen und unteren Bewehrungsgitter einschließlich der Heizungsrohre eingebracht wird.

7. Verfahren nach Anspruch 6, dadurch gekennzeichnet, daß vor dem Verlegen der Heizungsrohre Modulationsbänder mit Halterungsclips für die Heizungsrohre auf den unteren Bewehrungsgittern in vorbestimmter Weise angeordnet werden, wonach die Heizungsrohre in die Clips der Modulationsbänder eingesetzt werden, und daß die Modulationsbänder und Clips während oder nach dem Befestigen der Heizungsrohre an den Bewehrungsgittern der oberen Ebene entfernt werden.

8. Verfahren nach Anspruch 6 oder 7, dadurch gekennzeichnet, daß die unteren Bewehrungsgitter (2) im Bereich von Trennfugen im Unterboden mit Unterbrechungen verlegt werden.

**Revendications**

1. Sol chauffant, constitué de grilles d'armature (2, 6), disposées dans deux plans espacés l'un de l'autre, et de tubes de chauffage (3), notamment en matière plastique, dans lequel les grilles d'armature (2, 6) sont maintenues par rapport à une fondation (1) par des éléments d'espacement (4, 5) et dans lequel les grilles d'armature (2, 6) et les tubes de chauffage (3) sont noyés dans une masse durcissable (10), caractérisé en ce que les tubes de chauffage (3) sont maintenues sur les grilles supérieures d'armature (6) en s'étendant, par exemple en forme de méandres, au-dessous du plan des grilles supérieures d'armature (6) et en ce que l'espacement des unes et des autres grilles d'armature (2, 6) est supérieur au diamètre des tubes de chauffage (3).

2. Sol chauffant suivant la revendication 1, caractérisé en ce qu'il est prévu une fixation (11) pour les tubes de chauffage (3) et en ce que ceux-ci sont maintenus à distance des grilles supérieures et inférieures d'armature (2, 6).

3. Sol chauffant suivant la revendication 2, caractérisé en ce que, comme fixation pour les tubes de chauffage (3), il est prévu des bandes de feuillard (11), ou éléments analogues, qui maintiennent les tubes de chauffage (3) sur les grilles supérieures d'armature (6), au-dessous de celles-ci.

4. Sol chauffant suivant l'une des revendications 1 à 3, caractérisé en ce que les éléments d'espacement (4, 5) sont disposés sur une couche isolante qui repose sur une structure en béton brut (1) ou sur un sol naturel.

5. Sol chauffant suivant la revendication 4, caractérisé en ce que la structure en beton brut comporte des conduites d'évacuation des eaux.

6. Procédé de fabrication d'un sol chauffant, selon lequel on pose d'abord une grille inférieure d'armature (2) sur une fondation, on pose ensuite les tubes de chauffage de façon qu'il s'étendent sur la grille inférieure d'armature (2) et, ensuite, on met en place de premiers éléments d'espacement (4) destinés à maintenir la grille inférieure d'armature (2) au-dessus de la fondation et on élève la grille inférieure d'armature (2), en position horizontale, sur les premiers éléments d'espacement (4), caractérisé en ce qu'on met en place de seconds éléments d'espacement (5) sur la fondation, puis on dépose des grilles supérieures d'armature (6) sur les seconds éléments d'espacement (5), et en ce qu'alors, on élève les tubes de chauffage (3) et on les fixe sur les grilles supérieures d'armature (6), au-dessous de celles-ci, avant de mettre en place une masse durcissable, de préférence du béton (10), destinée à noyer les grilles supérieures d'armature, y compris les tubes de chauffage.

7. Procédé suivant la revendication 6, caractérisé en ce que, avant la pose des tubes de chauffage, on dispose, d'une manière préfixée, sur les grilles inférieures d'armature, des bandes de feuillard permettant une disposition modulaire et comportant des clips de fixation destinés aux tubes de chauffage, à la suite de quoi on met en place les tubes de chauffage dans les clips des bandes de disposition modulaire, et en ce que, pendant ou après la fixation des tubes de chauffage sur les grilles d'armature du plan supérieur, on éloigne les bandes de disposition modulaire et les clips.

8. Procédé suivant l'une des revendications 6 et 7, caractérisé en ce qu'on pose les grilles inférieures d'armature (2) avec des interruptions dans la zone des joints existant dans la fondation.

**Claims**

1. Floor consisting of reinforcing grids (2, 6) lying in two planes spaced apart from each other, and heating pipes (3), in particular of plastic, in which the reinforcing grids (2, 6) are held by spacing elements (4, 5) with respect to a subfloor (1) and in which the reinforcing grids (2, 6) and heating pipes (3) are embedded in a settable mass (10), characterized in that the heating pipes (3) are secured to the upper reinforcing grid (6) and have a for example meandering path running beneath the plane of the upper reinforcing grid (6) and that the spacing between the two reinforcing grids (2, 6) is greater than the diameter of the heating pipe (3).

2. Floor heating according to claim 1, characterized in that a holder (11) for the heating pipes (3) is provided and that the heating pipes (3) are held in spaced relationship with the upper and the lower reinforcing grids (2, 6).

3. Floor heating according to claim 2, characterized in that as holder for the heating pipes (3) strips or bands (11) or the like are provided which hold the heating pipes on the upper reinforcing grids (6) beneath the latter.

4. Floor heating according to any one of claims 1 to 3, characterized in that the spacing elements (4, 5) are arranged on an insulating layer which is laid on a raw concrete structure (11) or a raw floor.

5. Floor heating according to claim 4, characterized in that the raw concrete structure has water drainage passages.

6. Method of making a floor heating in which firstly a lower reinforcing grid (2) is laid on a subfloor, thereafter the heating pipes are laid extending on the lower reinforcing grid (2), then first spacing elements (4) for holding the lower reinforcing grid (2) are placed on the subfloor and the lower reinforcing grid (2) resting on the first spacing element (4) is raised, characterized in that second spacing elements (5) are placed on the subfloor and thereafter upper reinforcing grids (6) are placed on the second spacing elements (5), that then the heating pipes (3) are raised and secured to the upper reinforcing grids beneath said upper reinforcing grids (6) before a settable mass, preferably concrete (10), is introduced for embedding the upper and lower reinforcing grids including the heating pipes.

7. Method according to claim 6, characterized in that prior to the laying of the heating pipe modulation strips with holding clips for the heating pipes are arranged on the lower reinforcing grids in predetermined manner, whereafter the heating pipes are inserted into the clips of the modulation strips and that the modulation strips and clips are removed during of after the securing of the heating pipes to the reinforcing grids of the upper plane.

8. Method according to claim 6 or 7, characterized in that the lower reinforcing grids (2) are laid with interruptions in the region of the joints in the subfloor.

EP 0 209 618 B1